# EUROPEAN PATENT APPLICATION

(11) **EP 4 819 451 A1**
(43) Date of publication of application: **07.10.2026**
(21) Application number: 26156797.8
(22) Date of filing: 06.02.2026
(51) Int. Cl.: H02K 3/50, H02K 11/33

(54) **ELECTRIC DRIVE UNIT AND VEHICLE**

(30) Priority: 31.03.2025 JP 2025058452
(71) Applicant: MAZDA MOTOR CORPORATION, Fuchu-cho, Aki-gun Hiroshima 730-8670 (JP)
(72) Inventor: TATSUKI, Igarashi, Aki-gun, Hiroshima 730-8670 (JP); TOSHIMITSU, Yugami, Aki-gun, Hiroshima 730-8670 (JP)
(74) Representative: Lorenz Seidler Gossel Part. mbB

(57) **Abstract**

[Problem] To secure insulation of a bus bar that connects a motor terminal and an inverter terminal.

[Solution] A first and second connection piece 13, 23 are arranged side by side in a lateral direction H. A first and second inverter-side terminal piece 12, 22 are aligned in an axial direction X. The first and second inverter-side terminal pieces are bent from one end portion in the axial direction of their connection pieces to the other side in the lateral direction in a manner to face an up-down direction. . The first motor-side terminal piece is bent from another end portion in the axial direction of the first connection piece to the one side in the lateral direction in a manner to face the axial direction. The second motor-side terminal piece is bent from another end portion in the axial direction of the second connection piece to the other side in the lateral direction in a manner to face the axial direction.

## Description

### [Technical Field]

The present disclosure relates to an electric drive unit and a vehicle.

### [Background Art]

In a drive device disclosed in Patent Literature 1, plural plate-shaped bus bars, each of which connects respective one of plural inverter connection terminals and respective one of plural motor connection terminals, are arranged in a manner to overlap each other in a thickness direction.

### [Citation List]

### [Patent Literature]

[Patent Literature 1] JP2022-081278A

### [Summary of Invention]

### [Technical Problem]

In the bus bar arrangement described in Patent Literature 1, since the plural plate-shaped bus bars are arranged to overlap each other in the thickness direction, there is a possibility that the adjacent bus bars come into contact with each other, and thus insulation of the bus bars is not secured.

An object of the present disclosure is to secure insulation of a bus bar that connects a motor terminal and an inverter terminal.

### [Solution to Problem]

An electric drive unit according to the present disclosure includes: a motor that is arranged in a manner that an axial direction extends horizontally; an inverter that is arranged above the motor and controls the motor; a plate-shaped first bus bar that connects a first motor terminal of the motor and a first inverter terminal of the inverter; and a plate-shaped second bus bar that connects a second motor terminal of the motor and a second inverter terminal of the inverter, in which the first bus bar includes: a first motor-side terminal piece that is connected to the first motor terminal; a first inverter-side terminal piece that is connected to the first inverter terminal; and a first connection piece that connects the first motor-side terminal piece and the first inverter-side terminal piece, in which the second bus bar includes: a second motor-side terminal piece that is connected to the second motor terminal; a second inverter-side terminal piece that is connected to the second inverter terminal; and a second connection piece that connects the second motor-side terminal piece and the second inverter-side terminal piece, in which a lateral direction that extends horizontally and crosses the axial direction of the motor is defined, in which the first connection piece and the second connection piece are arranged side by side in the lateral direction, in which the first connection piece is located on one side in the lateral direction of the second connection piece, and extends from one side to another side in the axial direction while facing the lateral direction, in which the second connection piece is located on another side in the lateral direction of the first connection piece, and extends from the one side to the another side in the axial direction while facing the lateral direction, in which the first inverter-side terminal piece and the second inverter-side terminal piece are arranged side by side in the axial direction, in which the first inverter-side terminal piece is bent from one end portion in the axial direction of the first connection piece to the another side in the lateral direction in a manner to face an up-down direction, in which the second inverter-side terminal piece is bent from one end portion in the axial direction of the second connection piece to the one side in the lateral direction in a manner to face the up-down direction, in which the first motor-side terminal piece is bent from another end portion in the axial direction of the first connection piece to the one side in the lateral direction in a manner to face the axial direction, and in which the second motor-side terminal piece is bent from another end portion in the axial direction of the second connection piece to the another side in the lateral direction in a manner to face the axial direction.

It is possible to prevent the first bus bar and the second bus bar from coming into contact with each other. In particular, in a state where the first inverter-side terminal piece and the second inverter-side terminal piece are aligned in the axial direction while facing the up-down direction and the first motor-side terminal piece and the second motor-side terminal piece face the axial direction, it is possible to secure a space between the first connection piece and the second connection piece and thus to prevent the first connection piece and the second connection piece from coming into contact with each other.

It is possible to secure insulation of the bus bars, each of which connects the motor terminal and the inverter terminal.

In one embodiment, the electric drive unit further includes: a plate-shaped third bus bar that connects a third motor terminal of the motor and a third inverter terminal of the inverter, in which the third bus bar includes: a third motor-side terminal piece that is connected to the third motor terminal; a third inverter-side terminal piece that is connected to the third inverter terminal; and a third connection piece that connects the third motor-side terminal piece and the third inverter-side terminal piece, in which the third connection piece is arranged side by side between the first connection piece and the second connection piece in the lateral direction, and extends from the one side to the another side in the axial direction while facing the lateral direction, in which the third inverter-side terminal piece is aligned with the first inverter-side terminal piece and the second inverter-side terminal piece in the axial direction, and is bent from one end portion in the axial direction of the third connection piece to the another side in the lateral direction in a manner to face the up-down direction, and in which the third motor-side terminal piece is bent from another end portion in the axial direction of the third connection piece to one side in the up-down direction in a manner to face the axial direction.

It is possible to prevent the first bus bar, the second bus bar, and the third bus bar from coming into contact with each other.

In one embodiment, the electric drive unit further includes: a plate-shaped fourth bus bar that connects a fourth motor terminal of the motor and a fourth inverter terminal of the inverter, in which the fourth bus bar includes: a fourth motor-side terminal piece that is connected to the fourth motor terminal; a fourth inverter-side terminal piece that is connected to the fourth inverter terminal; and a fourth connection piece that connects the fourth motor-side terminal piece and the fourth inverter-side terminal piece, in which the fourth connection piece is arranged side by side between the second connection piece and the third connection piece in the lateral direction, and extends from the one side to the another side in the axial direction while facing the lateral direction, in which the fourth inverter-side terminal piece is aligned with the first inverter-side terminal piece, the second inverter-side terminal piece, and the third inverter-side terminal piece in the axial direction, and is bent from one end portion in the axial direction of the fourth connection piece to the one side in the lateral direction in a manner to face the up-down direction, and in which the fourth motor-side terminal piece is bent from another end portion in the axial direction of the fourth connection piece to another side in the up-down direction in a manner to face the axial direction.

It is possible to prevent the first bus bar, the second bus bar, the third bus bar, and the fourth bus bar from coming into contact with each other.

In one embodiment, the electric drive unit further includes: a plate-shaped third bus bar that connects a third motor terminal of the motor and a third inverter terminal of the inverter, in which the third bus bar includes: a third motor-side terminal piece that is connected to the third motor terminal; a third inverter-side terminal piece that is connected to the third inverter terminal; and a third connection piece that connects the third motor-side terminal piece and the third inverter-side terminal piece, in which the third connection piece is arranged side by side between the first connection piece and the second connection piece in the lateral direction, and extends from the one side to the another side in the axial direction while facing the up-down direction, in which the third inverter-side terminal piece is aligned with the first inverter-side terminal piece and the second inverter-side terminal piece in the axial direction, extends from one end portion in the axial direction of the third connection piece to another side in the up-down direction, and is then bent to the another side in the lateral direction in a manner to face the up-down direction, and in which the third motor-side terminal piece is bent from another end portion in the axial direction of the third connection piece to one side in the up-down direction in a manner to face the axial direction.

It is possible to prevent the first bus bar, the second bus bar, and the third bus bar from coming into contact with each other.

In one embodiment, the electric drive unit further includes: a plate-shaped fourth bus bar that connects a fourth motor terminal of the motor and a fourth inverter terminal of the inverter, in which the fourth bus bar includes: a fourth motor-side terminal piece that is connected to the fourth motor terminal; a fourth inverter-side terminal piece that is connected to the fourth inverter terminal; and a fourth connection piece that connects the fourth motor-side terminal piece and the fourth inverter-side terminal piece, in which the fourth connection piece is arranged side by side between the first connection piece and the second connection piece in the lateral direction, is aligned with the third connection piece in the up-down direction on the another side in the up-down direction of the third connection piece, and extends from the one side to the another side in the axial direction while facing the up-down direction, in which the fourth inverter-side terminal piece is aligned with the first inverter-side terminal piece, the second inverter-side terminal piece, and the third inverter-side terminal piece in the axial direction, and is continuous with one end portion in the axial direction of the fourth connection piece in a manner to face the up-down direction, and in which the fourth motor-side terminal piece is bent from another end portion in the axial direction of the fourth connection piece to the another side in the up-down direction in a manner to face the axial direction.

It is possible to prevent the first bus bar, the second bus bar, the third bus bar, and the fourth bus bar from coming into contact with each other.

In one embodiment, the first inverter-side terminal piece, the second inverter-side terminal piece, the third inverter-side terminal piece, and the fourth inverter-side terminal piece can be located at the same position in the up-down direction.

In one embodiment, the first motor-side terminal piece, the second motor-side terminal piece, and the third motor-side terminal piece can be located at the same position in the axial direction.

In one embodiment, the fourth motor-side terminal piece can be arranged to be shifted in the axial direction with respect to the first motor-side terminal piece, the second motor-side terminal piece, and the third motor-side terminal piece.

In one embodiment, the first motor terminal and the first inverter terminal may correspond to a U-phase, the second motor terminal and the second inverter terminal may correspond to a V-phase, and the third motor terminal and the third inverter terminal may correspond to a W-phase. The fourth motor terminal and the fourth inverter terminal may correspond to a neutral point.

In one embodiment, the electric drive unit may comprise a terminal block made of resin that holds the bus bars and insulates the bus bars from each other. Preferably, the terminal block can be formed by injection molding.

In one embodiment, the inverter includes a case in which an accommodation hole is formed, and the terminal block is inserted in the accommodation hole.

A vehicle according to the present disclosure includes the electric drive unit.

### [Advantageous Effects of Invention]

According to the present disclosure, the insulation of the bus bar that connects the motor terminal and the inverter terminal is secured.

### [Brief Description of Drawings]

[FIG. 1] FIG. 1 is a perspective view of an electric drive unit according to a first embodiment.
[FIG. 2] FIG. 2 is a front view in which the electric drive unit according to the first embodiment is seen from the front.
[FIG. 3] FIG. 3 is a perspective view illustrating a terminal block according to the first embodiment.
[FIG. 4] FIG. 4 is a perspective view of bus bars according to the first embodiment.
[FIG. 5] FIG. 5 is a front view in which the bus bars according to the first embodiment are seen from the front.
[FIG. 6] FIG. 6 is a perspective view of bus bars according to a second embodiment.

### [Description of Embodiments]

Hereinafter, embodiments of the present disclosure will be described in detail with reference to the drawings. The following description of the preferred embodiments is merely illustrative in all respect and is not intended to limit the present disclosure, application subjects thereof, or application thereof.

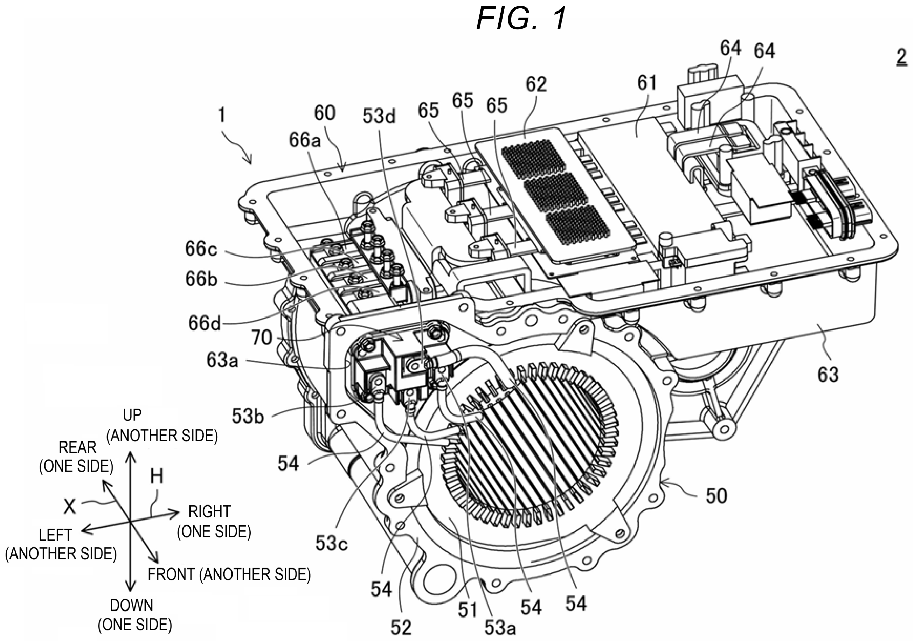

In the following description, front, rear, left, right, up, and down are based on arrows illustrated in FIG. 1. Each direction is irrelevant of a viewpoint of a driver on a vehicle.

### <First Embodiment>

A first embodiment will be described.

### (Electric Drive Unit)

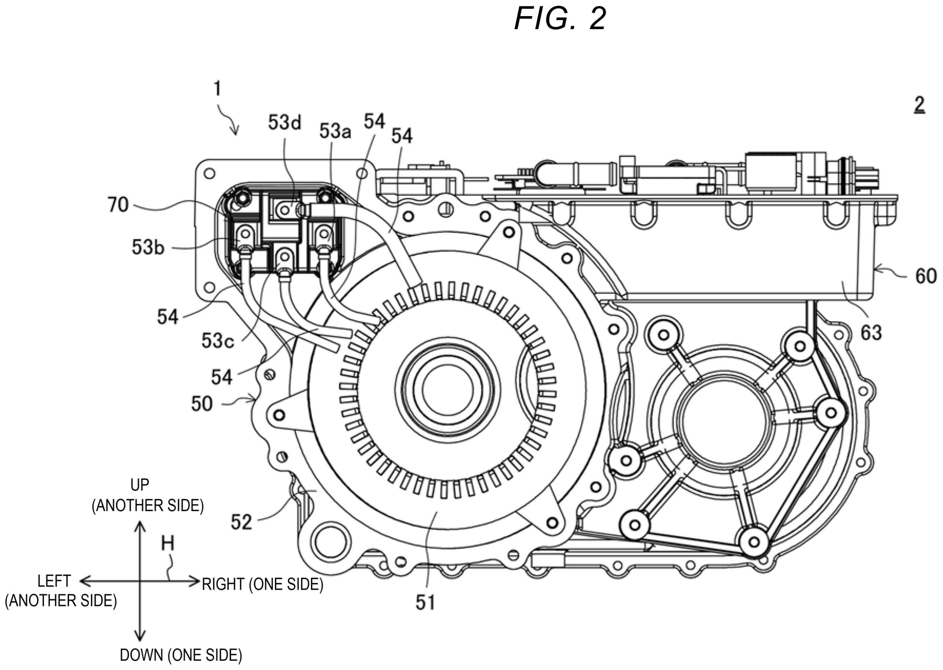

FIG. 1 is a perspective view of an electric drive unit 1. FIG. 2 is a front view in which the electric drive unit 1 is seen from the front.

The electric drive unit 1 is mounted on a vehicle 2. The vehicle 2 includes the electric drive unit 1. The electric drive unit 1 is arranged in a motor room in a front portion of the vehicle 2, for example. The electric drive unit 1 constitutes a power unit of the vehicle 2.

The electric drive unit 1 includes a motor 50, an inverter 60, a terminal block 70, a first bus bar 10, a second bus bar 20, a third bus bar 30, and a fourth bus bar 40.

### (Motor)

The motor 50 is arranged such that an axial direction X thereof extends horizontally. The axial direction X of the motor 50 extends horizontally. In this example, the axial direction X of the motor 50 extends in a front-rear direction of the horizontal direction. The horizontal direction is orthogonal to a vertical direction. One side of the axial direction X is defined as a rear side. The other side of the axial direction X is defined as a front side.

The motor 50 includes a drive shaft (not illustrated), a rotor (not illustrated), a stator 51, and a housing 52. The drive shaft extends in the axial direction X. The rotor has a cylindrical shape that extends in the axial direction X, and is fixed to an outer circumference of the drive shaft.

The stator 51 has a cylindrical shape that extends in the axial direction X, and is arranged on an outer circumferential side of the rotor. A gap is provided between the rotor and the stator 51. The stator 51 is fixed to an inner circumferential surface of a cylindrical portion of the housing 52. A coil (not illustrated) is wound around teeth of the stator 51. There are three types of coils of a U-phase, a V-phase, and a W-phase in three-phase alternating current.

The motor 50 includes a first motor terminal 53a, a second motor terminal 53b, a third motor terminal 53c, and a fourth motor terminal 53d. The first motor terminal 53a corresponds to the U-phase, and is connected to a U-phase coil of the stator 51 via a cable 54. The second motor terminal 53b corresponds to the V-phase, and is connected to a V-phase coil of the stator 51 via the cable 54. The third motor terminal 53c corresponds to the W-phase, and is connected to a W-phase coil of the stator 51 via the cable 54. The fourth motor terminal 53d corresponds to a neutral point, and is connected to a neutral point of the stator 51 via the cable 54. The neutral point is a point at which a voltage is always zero in a three-phase alternating current.

The motor 50 may function as a generator that generates regenerative power when the vehicle 2 is decelerated or when the vehicle 2 travels downhill.

### (Inverter)

The inverter 60 is arranged above the motor 50. An up-down direction is the vertical direction and is orthogonal to the horizontal direction. One side of the up-down direction is defined as a lower side. The other side of the up-down direction is defined as an upper side.

The inverter 60 controls the motor 50. In detail, the inverter 60 controls electric power that is supplied from a battery (not illustrated) to the motor 50. The inverter 60 is interposed between the motor 50 and the battery. The inverter 60 includes a smoothing capacitor 61, a control board 62, and a case 63.

The smoothing capacitor 61 is connected to the battery via two (positive and negative) DC bus bars 64. The smoothing capacitor 61 smoothes the electric power from the battery.

The control board 62 is connected to the smoothing capacitor 61. A power-based semiconductor such as an IGBT or a MOSFET is mounted on the control board 62. The control board 62 includes an inverter circuit. The control board 62 includes a power module. The control board 62 controls the electric power input to the motor 50. The smoothing capacitor 61 and the control board 62 in the inverter 60 convert the electric power from the battery from DC to AC and supply it to the motor 50, and also control the motor 50 (in detail, control the electric power supplied from the battery to the motor 50).

Here, a lateral direction H that extends horizontally and crosses the axial direction X of the motor 50 is defined. In detail, the lateral direction H extends horizontally and is orthogonal to the axial direction X of the motor 50. In the present example, the lateral direction H extends in a right-left direction of the horizontal direction. One side of the lateral direction H is defined as a right side. The other side of the lateral direction H is defined as a left side.

The case 63 extends longitudinally in the lateral direction H and briefly in the axial direction X. The case 63 is fixed to an upper portion of the motor 50. The case 63 has a substantially quadrilateral box shape that is opened upward. In the case 63, the smoothing capacitor 61, the control board 62, and inverter terminals 66a to 66d, which will be described below, are arranged in this order from the right to the left.

The inverter 60 includes the first inverter terminal 66a, the second inverter terminal 66b, a third inverter terminal 66c, and a fourth inverter terminal 66d. These inverter terminals 66a to 66d are arranged on the left side in the case 63.

The first inverter terminal 66a corresponds to the U-phase, and is connected to the control board 62 via a U-phase AC bus bar 65. The second inverter terminal 66b corresponds to the V-phase, and is connected to the control board 62 via a V-phase AC bus bar 65. The third inverter terminal 66c corresponds to the W-phase and is connected to the control board 62 via the W-phase AC bus bar 65. The fourth inverter terminal 66d corresponds to the neutral point. The fourth inverter terminal 66d may be grounded.

The first inverter terminal 66a, the third inverter terminal 66c, the second inverter terminal 66b, and the fourth inverter terminal 66d are aligned from the rear to the front in the axial direction X.

### (Terminal Block)

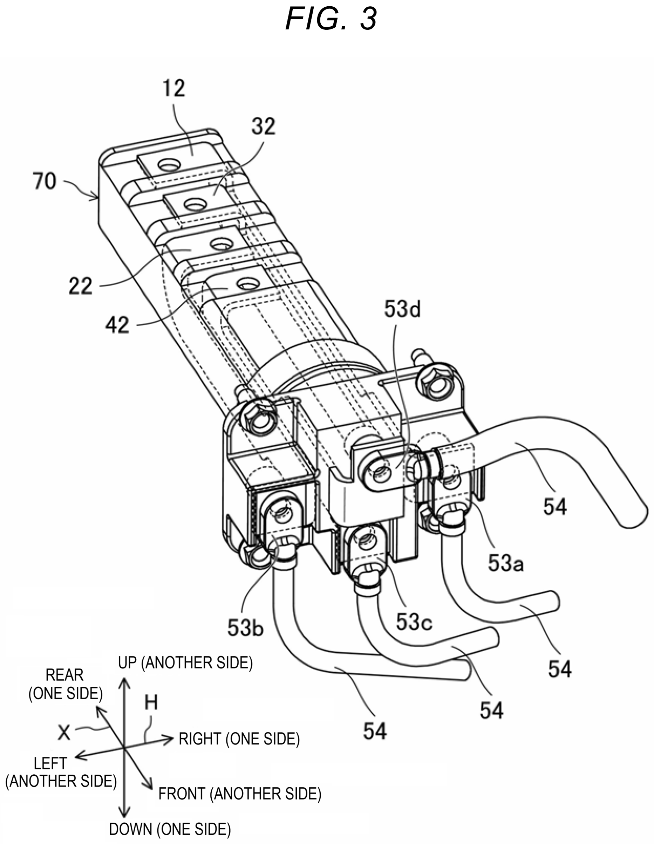

FIG. 3 is a perspective view of the terminal block 70. The terminal block 70 is made of resin. The terminal block 70 is formed by injection molding (in detail, mold forming) . The terminal block 70 is formed in a substantially rod shape that extends in the axial direction X. Here, an accommodation hole 63a that extends in the axial direction X is formed in a left portion of the case 63 for the inverter 60. The terminal block 70 is inserted in the accommodation hole 63a.

The terminal block 70 holds bus bars 10 to 40 described below. The terminal block 70 is mold-formed in a state of holding the bus bars 10 to 40 described below. The terminal block 70 insulates the bus bars 10 to 40 described below from each other by resin.

### (Bus Bars)

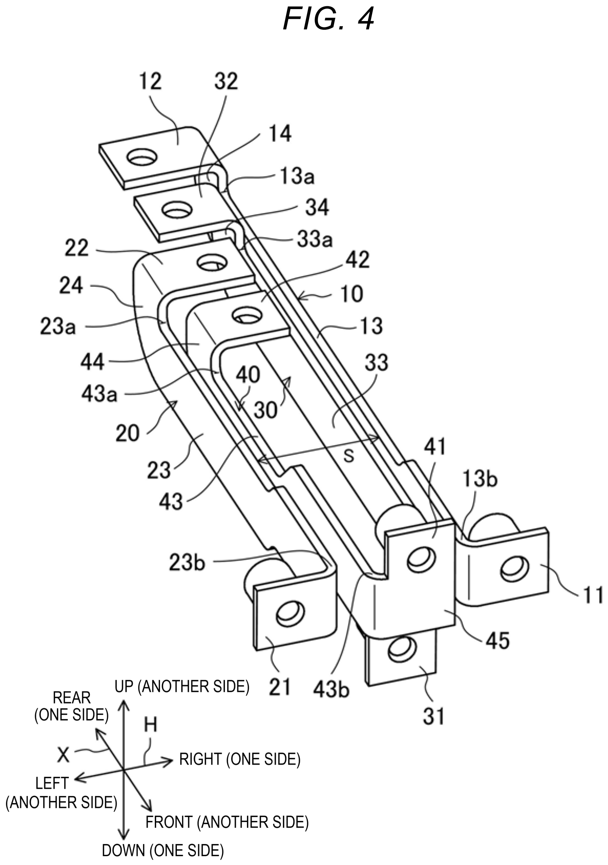

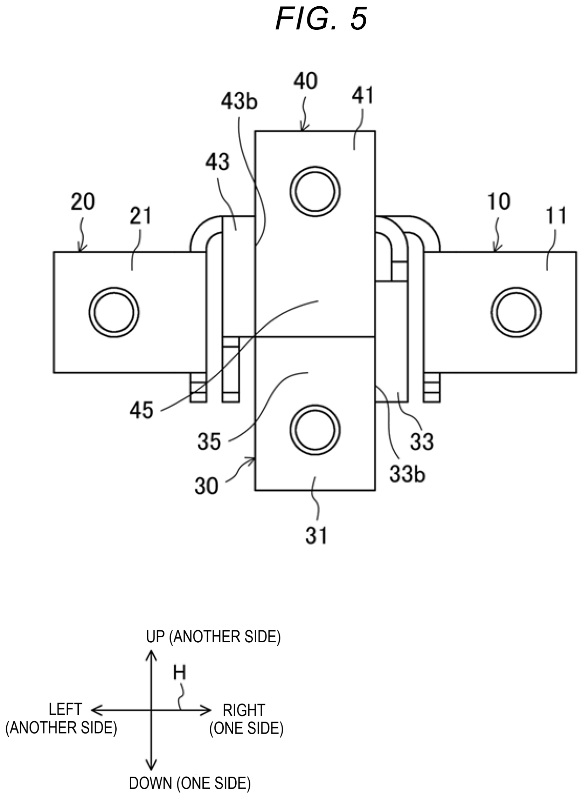

FIG. 4 is a perspective view of the bus bars 10 to 40. FIG. 5 is a front view in which the bus bars 10 to 40 are seen from the front.

The first bus bar 10 has a plate shape. The second bus bar 20 has a plate shape. The third bus bar 30 has a plate shape. The fourth bus bar 40 has a plate shape.

The first bus bar 10 connects the first motor terminal 53a of the motor 50 and the first inverter terminal 66a of the inverter 60. The second bus bar 20 connects the second motor terminal 53b of the motor 50 and the second inverter terminal 66b of the inverter 60. The third bus bar 30 connects the third motor terminal 53c of the motor 50 and the third inverter terminal 66c of the inverter 60. The fourth bus bar 40 connects the fourth motor terminal 53d of the motor 50 and the fourth inverter terminal 66d of the inverter 60.

The first bus bar 10 includes a first motor-side terminal piece 11, a first inverter-side terminal piece 12, and a first connection piece 13. The first motor-side terminal piece 11 is connected to the first motor terminal 53a. The first inverter-side terminal piece 12 is connected to the first inverter terminal 66a. The first connection piece 13 connects the first motor-side terminal piece 11 and the first inverter-side terminal piece 12.

The second bus bar 20 includes a second motor-side terminal piece 21, a second inverter-side terminal piece 22, and a second connection piece 23. The second motor-side terminal piece 21 is connected to the second motor terminal 53b. The second inverter-side terminal piece 22 is connected to the second inverter terminal 66b. The second connection piece 23 connects the second motor-side terminal piece 21 and the second inverter-side terminal piece 22.

The third bus bar 30 includes a third motor-side terminal piece 31, a third inverter-side terminal piece 32, and a third connection piece 33. The third motor-side terminal piece 31 is connected to the third motor terminal 53c. The third inverter-side terminal piece 32 is connected to the third inverter terminal 66c. The third connection piece 33 connects the third motor-side terminal piece 31 and the third inverter-side terminal piece 32.

The fourth bus bar 40 includes a fourth motor-side terminal piece 41, a fourth inverter-side terminal piece 42, and a fourth connection piece 43. The fourth motor-side terminal piece 41 is connected to the fourth motor terminal 53d. The fourth inverter-side terminal piece 42 is connected to the fourth inverter terminal 66d. The fourth connection piece 43 connects the fourth motor-side terminal piece 41 and the fourth inverter-side terminal piece 42.

The first connection piece 13 and the second connection piece 23 are arranged side by side in the lateral direction H (the right-left direction). The first connection piece 13 is located on one side (the right side) of the second connection piece 23 in the lateral direction H (the right-left direction). The second connection piece 23 is located on the other side (the left side) of the first connection piece 13 in the lateral direction H (the right-left direction).

The first connection piece 13 extends from one side (the rear side) to the other side (the front side) in the axial direction X (the front-rear direction) while facing the lateral direction H (the right-left direction). The second connection piece 23 extends from one side (the rear side) to the other side (the front side) in the axial direction X (the front-rear direction) while facing the lateral direction H (the right-left direction).

The third connection piece 33 is arranged side by side between the first connection piece 13 and the second connection piece 23 in the lateral direction H (the right-left direction). The third connection piece 33 extends from one side (the rear side) to the other side (the front side) in the axial direction X (the front-rear direction) while facing the lateral direction H (the right-left direction).

The fourth connection piece 43 is arranged side by side between the second connection piece 23 and the third connection piece 33 in the lateral direction H (the right-left direction). The fourth connection piece 43 extends from one side (the rear side) to the other side (the front side) in the axial direction X (front-rear direction) while facing the lateral direction H (the right-left direction).

The first connection piece 13, the third connection piece 33, the fourth connection piece 43, and the second connection piece 23 are arranged in this order from one side (the right side) to the other side (the left side) in the lateral direction H (the right-left direction).

The first inverter-side terminal piece 12 and the second inverter-side terminal piece 22 are aligned in the axial direction X (the front-rear direction). The first inverter-side terminal piece 12 is bent from one end portion 13a (a rear end portion) of the first connection piece 13 in the axial direction X (the front-rear direction) to the other side (the left side) in the lateral direction H (the right-left direction) in a manner to face the up-down direction. In detail, the first inverter-side terminal piece 12 extends from another end portion (an upper end portion) in the up-down direction of the one end portion 13a (the rear end portion) of the first connection piece 13 in the axial direction X (the front-rear direction) to the other side (the upper side) in the up-down direction by a coupling piece 14 (facing the lateral direction H), and is then bent to the other side (the left side) in the lateral direction H (the right-left direction) in the manner to face the up-down direction.

The second inverter-side terminal piece 22 is bent from one end portion 23a (a rear end portion) of the second connection piece 23 in the axial direction X (the front-rear direction) to one side (the right side) in the lateral direction H (the right-left direction) in a manner to face the up-down direction. In detail, the second inverter-side terminal piece 22 extends from another end portion (an upper end portion) in the up-down direction of the one end portion 23a (the rear end portion) of the second connection piece 23 in the axial direction X (the front-rear direction) to the other side (the upper side) in the up-down direction by a coupling piece 24 (facing the lateral direction H), and is then bent to the one side (the right side) in the lateral direction H (the right-left direction) in the manner to face the up-down direction.

The third inverter-side terminal piece 32 is aligned with the first inverter-side terminal piece 12 and the second inverter-side terminal piece 22 in the axial direction X (the front-rear direction). The third inverter-side terminal piece 32 is bent from one end portion 33a (a rear end portion) of the third connection piece 33 in the axial direction X (the front-rear direction) to the other side (the left side) in the lateral direction H (the right-left direction) in a manner to face the up-down direction. In detail, the third inverter-side terminal piece 32 extends from another end portion (an upper end portion) in the up-down direction of the one end portion 33a (the rear end portion) of the third connection piece 33 in the axial direction X (the front-rear direction) to the other side (the upper side) in the up-down direction by a coupling piece 34 (facing the lateral direction H), and is then bent to the other side (the left side) in the lateral direction H (the right-left direction) in the manner to face the up-down direction.

The fourth inverter-side terminal piece 42 is aligned with the first inverter-side terminal piece 12, the second inverter-side terminal piece 22, and the third inverter-side terminal piece 32 in the axial direction X (the front-rear direction). The fourth inverter-side terminal piece 42 is bent from one end portion 43a (a rear end portion) of the fourth connection piece 43 in the axial direction X (the front-rear direction) to one side (the right side) in the lateral direction H (the right-left direction) in a manner to face the up-down direction. In detail, the fourth inverter-side terminal piece 42 extends from another end portion (an upper end portion) in the up-down direction of the one end portion 43a (the rear end portion) of the fourth connection piece 43 in the axial direction X (the front-rear direction) to the other side (the upper side) in the up-down direction by a coupling piece 44 (facing the lateral direction H), and is then bent to the one side (the right side) in the lateral direction H (the right-left direction) in the manner to face the up-down direction.

The first inverter-side terminal piece 12, the third inverter-side terminal piece 32, the second inverter-side terminal piece 22, and the fourth inverter-side terminal piece 42 are aligned in this order from the one side (the rear side) to the other side (the front side) in the axial direction X (the front-rear direction).

The first inverter-side terminal piece 12, the second inverter-side terminal piece 22, the third inverter-side terminal piece 32, and the fourth inverter-side terminal piece 42 are located at the same position in the up-down direction to each other.

In the terminal block 70, the first inverter-side terminal piece 12, the second inverter-side terminal piece 22, the third inverter-side terminal piece 32, and the fourth inverter-side terminal piece 42 are exposed to the outside.

The first motor-side terminal piece 11 is bent from another end portion 13b (a front end portion) of the first connection piece 13 in the axial direction X (the front-rear direction) to the one side (the right side) in the lateral direction H (the right-left direction) in a manner to face the axial direction X (the front-rear direction).

The second motor-side terminal piece 21 is bent from another end portion 23b (a front end portion) of the second connection piece 23 in the axial direction X (the front-rear direction) to the other side (the left side) in the lateral direction (the right-left direction) in a manner to face the axial direction X (the front-rear direction).

The third motor-side terminal piece 31 is bent from another end portion 33b (a front end portion) of the third connection piece 33 in the axial direction X (the front-rear direction) to one side (a lower side) in the up-down direction in a manner to face the axial direction X (the front-rear direction). In detail, the third motor-side terminal piece 31 extends from another side surface (a left surface) in the lateral direction H (the right-left direction) of the other end portion 33b (the front end portion) of the third connection piece 33 in the axial direction X (the front-rear direction) to the other side (the left side) in the lateral direction H (the right-left direction) by a coupling piece 35 (facing the axial direction X), and is then bent to the one side (the lower side) in the up-down direction in the manner to face the axial direction X (the front-rear direction) (see FIG. 5).

The fourth motor-side terminal piece 41 is bent from another end portion 43b (a front end portion) of the fourth connection piece 43 in the axial direction X (the front-rear direction) to the other side (the upper side) in the up-down direction in a manner to face the axial direction X (the front-rear direction). The fourth motor-side terminal piece 41 extends from one side surface (a right surface) in the lateral direction H (the right-left direction) of the other end portion 43b (the front end portion) of the fourth connection piece 43 in the axial direction X (the front-rear direction) to the one side (the right side) in the lateral direction H (the right-left direction) by a coupling piece 45 (facing the axial direction X), and is then bent to the other side (the upper side) in the up-down direction in the manner to face the axial direction X (the front-rear direction).

The first motor-side terminal piece 11, the second motor-side terminal piece 21, and the third motor-side terminal piece 31 are located at the same position (flush) in the axial direction X (the front-rear direction). The fourth motor-side terminal piece 41 may be arranged to be shifted to the other side (the front side) in the axial direction X (the front-rear direction) with respect to the first motor-side terminal piece 11, the second motor-side terminal piece 21, and the third motor-side terminal piece 31.

In the terminal block 70, the first motor-side terminal piece 11, the second motor-side terminal piece 21, the third motor-side terminal piece 31, and the fourth motor-side terminal piece 41 are exposed to the outside.

### (Operational Effects)

It is possible to prevent the first bus bar 10 and the second bus bar 20 from coming into contact with each other. In particular, in the state where the first inverter-side terminal piece 12 and the second inverter-side terminal piece 22 are aligned in the axial direction (the front-rear direction) while facing the up-down direction and the first motor-side terminal piece 11 and the second motor-side terminal piece 21 face the axial direction (the front-rear direction), it is possible to secure a space S between the first connection piece 13 and the second connection piece 23 and thus to prevent the first connection piece 13 and the second connection piece 23 from coming into contact with each other.

Furthermore, it is also possible to prevent the first bus bar 10, the second bus bar 20, the third bus bar 30, and the fourth bus bar 40 from coming into contact with each other.

It is possible to secure the insulation of the bus bars (the first bus bar 10, the second bus bar 20, the third bus bar 30, and the fourth bus bar 40) that connect the terminals (the first motor terminal 53a, the second motor terminal 53b, the third motor terminal 53c, and the fourth motor terminal 53d) of the motor 50 and the terminals (the first inverter terminal 66a, the second inverter terminal 66b, the third inverter terminal 66c, and the fourth inverter terminal 66d) of the inverter 60.

### <Second Embodiment>

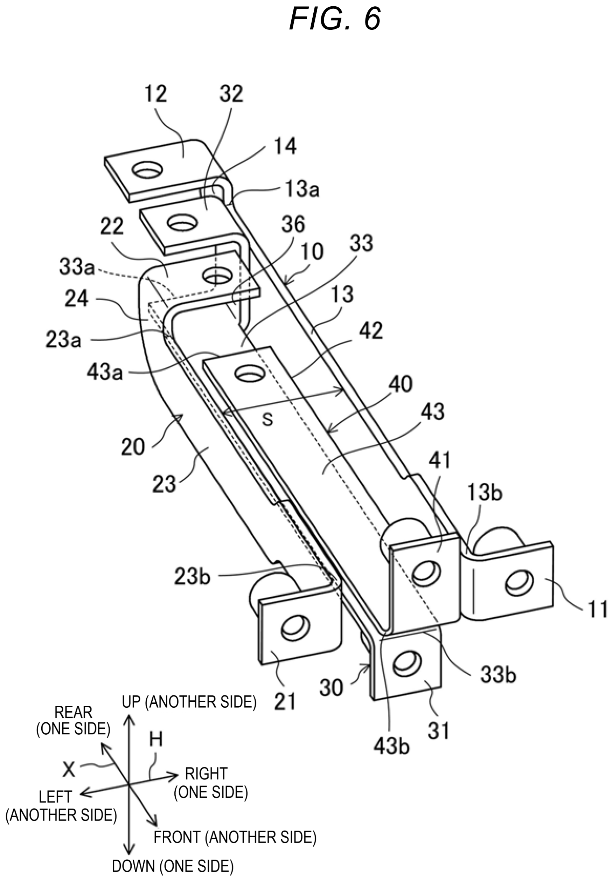

A second embodiment will be described. In the following description, the same components as those in the above embodiment will be denoted by the same reference signs, and the detailed description thereon will be omitted. FIG. 6 is a perspective view of the bus bars 10 to 40 according to the second embodiment.

The third connection piece 33 is arranged side by side between the first connection piece 13 and the second connection piece 23 in the lateral direction H (the right-left direction). In detail, in the lateral direction H (the right-left direction), the third connection piece 33 is arranged side by side between one end portion (a lower end portion) of the first connection piece 13 in the up-down direction and one end portion (a lower end portion) of the second connection piece 23 in the up-down direction. The third connection piece 33 extends from one side (the rear side) to the other side (the front side) in the axial direction X (the front-rear direction) while facing the up-down direction.

The third inverter-side terminal piece 32 is aligned with the first inverter-side terminal piece 12 and the second inverter-side terminal piece 22 in the axial direction X (the front-rear direction). The third inverter-side terminal piece 32 extends from the one end portion 33a of the third connection piece 33 in the axial direction X (the front-rear direction) to the other side (the upper side) in the up-down direction (by a coupling piece 36 facing the lateral direction H), and is then bent to the other side (the left side) in the lateral direction H (the right-left direction) in the manner to face the up-down direction. In detail, the third inverter-side terminal piece 32 extends from one end portion (a right end portion) in the lateral direction H (the right-left direction) of the one end portion 33a (the rear end portion) of the third connection piece 33 in the axial direction X (the front-rear direction) to the other side (the upper side) in the up-down direction by the coupling piece 36 facing the lateral direction H (the right-left direction), and is then bent to the other side (the left side) in the lateral direction H (the right-left direction) in the manner to face the up-down direction.

The third motor-side terminal piece 31 is bent from the other end portion 33b (the front end portion) of the third connection piece 33 in the axial direction X (the front-rear direction) to the one side (the lower side) in the up-down direction in a manner to face the axial direction X (the front-rear direction).

The fourth connection piece 43 is arranged side by side between the first connection piece 13 and the second connection piece 23 in the lateral direction H (the right-left direction). In detail, in the lateral direction H (the right-left direction), the fourth connection piece 43 is arranged side by side between another end portion (an upper end portion) of the first connection piece 13 in the up-down direction and another end portion (an upper end portion) of the second connection piece 23 in the up-down direction. The fourth connection piece 43 is located on the other side (the upper side) in the up-down direction with respect to the third connection piece 33. At a position on the other side of (above) the third connection piece 33 in the up-down direction, the fourth connection piece 43 is aligned with the third connection piece 33 in the up-down direction. The fourth connection piece 43 extends from the one side (the rear side) to the other side (the front side) in the axial direction X (the front-rear direction) while facing the up-down direction.

The fourth inverter-side terminal piece 42 is aligned with the first inverter-side terminal piece 12, the second inverter-side terminal piece 22, and the third inverter-side terminal piece 32 in the axial direction X (the front-rear direction). The fourth inverter-side terminal piece 42 is continuous with the one end portion 43a (the rear end portion) of the fourth connection piece 43 in the axial direction X in a manner to face the up-down direction. It can be said that the fourth inverter-side terminal piece 42 is formed by the one end portion 43a (the rear end portion) of the fourth connection piece 43 in the axial direction X.

The first inverter-side terminal piece 12, the second inverter-side terminal piece 22, the third inverter-side terminal piece 32 and the fourth inverter-side terminal piece 42 are located at the same position in the up-down direction with each other.

The fourth motor-side terminal piece 41 is bent from the other end portion 43b (the front end portion) of the fourth connection piece 43 in the axial direction X (the front-rear direction) to the other side (the upper side) in the up-down direction in the manner to face the axial direction X (the front-rear direction).

The first motor-side terminal piece 11, the second motor-side terminal piece 21, and the third motor-side terminal piece 31 are located at the same position (flush) in the axial direction X (the front-rear direction). The fourth motor-side terminal piece 41 may be arranged to be shifted to the other side (the front side) in the axial direction X (the front-rear direction) with respect to the first motor-side terminal piece 11, the second motor-side terminal piece 21, and the third motor-side terminal piece 31.

The rest of the configuration is the same as that in the first embodiment.

It is also possible to prevent the first bus bar 10, the second bus bar 20, the third bus bar 30, and the fourth bus bar 40 from coming into contact with each other.

### <Other Embodiments>

The present disclosure has been described so far in the preferred embodiments. However, such description is not limiting, and various modifications, replacements, or combinations can be made.

One side of the lateral direction H may be defined as the left side, and the other side of the lateral direction H may be defined as the right side. One side of the axial direction X may be defined as the front side, and the other side of the axial direction X may be defined as the rear side. One side of the up-down direction may be defined as the upper side, and the other side of the up-down direction may be defined as the lower side.

The axial direction X may be defined as the right-left direction. In this case, the lateral direction H is defined as the front-rear direction.

The third bus bar 30 and the fourth bus bar 40 may not be provided.

The electric drive unit 1 may not be applied to the vehicle 2.

### [Industrial Applicability]

Since the present disclosure is applicable to the electric drive unit and the vehicle, it is extremely useful and has high industrial applicability.

### [Reference Signs List]

X: axial direction
H: lateral direction
S: space
1: electric drive unit
2: vehicle
10: first bus bar
11: first motor-side terminal piece
12: first inverter-side terminal piece
13: first connection piece
13a: one end portion
13b: another end portion
20: second bus bar
21: second motor-side terminal piece
22: second inverter-side terminal piece
23: second connection piece
23a: one end portion
23b: another end portion
30: third bus bar
31: third motor-side terminal piece
32: third inverter-side terminal piece
33: third connection piece
33a: one end portion
33b: another end portion
40: fourth bus bar
41: fourth motor-side terminal piece
42: fourth inverter-side terminal piece
43: fourth connection piece
43a: one end portion
43b: another end portion
50: motor
53a: first motor terminal
53b: second motor terminal
53c: third motor terminal
53d: fourth motor terminal
60: inverter
66a: first inverter terminal
66b: second inverter terminal
66c: third inverter terminal
66d: fourth inverter terminal

## Claims

1. An electric drive unit (1) comprising:
a motor (50) that is arranged in a manner that an axial direction extends horizontally;
an inverter (60) that is arranged above the motor (50) and controls the motor (50);
a plate-shaped first bus bar (10) that connects a first motor terminal (53a) of the motor (50) and a first inverter terminal (66a) of the inverter (60); and
a plate-shaped second bus bar (20) that connects a second motor terminal (53b) of the motor (50) and a second inverter terminal (66b) of the inverter (60), wherein
the first bus bar (10) includes:
a first motor-side terminal piece (11) that is connected to the first motor terminal (53a);
a first inverter-side terminal piece (12) that is connected to the first inverter terminal (66a); and
a first connection piece (13) that connects the first motor-side terminal piece (11) and the first inverter-side terminal piece (12),
the second bus bar (20) includes:
a second motor-side terminal piece (21) that is connected to the second motor terminal (53b);
a second inverter-side terminal piece (22) that is connected to the second inverter terminal (66b); and
a second connection piece (23) that connects the second motor-side terminal piece (21) and the second inverter-side terminal piece (22),
a lateral direction (H) that extends horizontally and crosses the axial direction (X) of the motor (50) is defined,
the first connection piece (13) and the second connection piece (23) are arranged side by side in the lateral direction (H),
the first connection piece (13) is located on one side in the lateral direction (H) of the second connection piece (23), and extends from one side to another side in the axial direction (X) while facing the lateral direction (H),
the second connection piece (23) is located on another side in the lateral direction (H) of the first connection piece (13), and extends from the one side to the another side in the axial direction (X) while facing the lateral direction (H),
the first inverter-side terminal piece (12) and the second inverter-side terminal piece (22) are arranged side by side in the axial direction (X),
the first inverter-side terminal piece (12) is bent from one end portion (13a) in the axial direction (X) of the first connection piece (13) to the another side in the lateral direction (H) in a manner to face an up-down direction,
the second inverter-side terminal piece (22) is bent from one end portion (23a) in the axial direction (X) of the second connection piece (23) to the one side in the lateral direction (H) in a manner to face the up-down direction,
the first motor-side terminal piece (11) is bent from another end portion (13b) in the axial direction (X) of the first connection piece (13) to the one side in the lateral direction (H) in a manner to face the axial direction (X), and
the second motor-side terminal piece (21) is bent from another end portion (23b) in the axial direction (X) of the second connection piece (23) to the another side in the lateral direction (H) in a manner to face the axial direction (X).

2. The electric drive unit (1) according to claim 1 further comprising:
a plate-shaped third bus bar (30) that connects a third motor terminal (53c) of the motor (50) and a third inverter terminal (66c) of the inverter (60), wherein
the third bus bar (30) includes:
a third motor-side terminal piece (31) that is connected to the third motor terminal (53c);
a third inverter-side terminal piece (32) that is connected to the third inverter terminal (66c); and
a third connection piece (33) that connects the third motor-side terminal piece (31) and the third inverter-side terminal piece (32),
the third connection piece (33) is arranged side by side between the first connection piece (13) and the second connection piece (23) in the lateral direction (H), and extends from the one side to the another side in the axial direction (X) while facing the lateral direction (H),
the third inverter-side terminal piece (32) is aligned with the first inverter-side terminal piece (12) and the second inverter-side terminal piece (22) in the axial direction (X), and is bent from one end portion (33a) in the axial direction (X) of the third connection piece (33) to the another side in the lateral direction (H) in a manner to face the up-down direction, and
the third motor-side terminal piece (31) is bent from another end portion (33b) in the axial direction (X) of the third connection piece (33) to one side in the up-down direction in a manner to face the axial direction (X).

3. The electric drive unit (1) according to claim 2 further comprising:
a plate-shaped fourth bus bar (40) that connects a fourth motor terminal (53d) of the motor (50) and a fourth inverter terminal (66d) of the inverter (60), wherein
the fourth bus bar (40) includes:
a fourth motor-side terminal piece (41) that is connected to the fourth motor terminal (53d);
a fourth inverter-side terminal piece (42) that is connected to the fourth inverter terminal (42); and
a fourth connection piece (43) that connects the fourth motor-side terminal piece (41) and the fourth inverter-side terminal piece (42),
the fourth connection piece (43) is arranged side by side between the second connection piece (23) and the third connection piece (33) in the lateral direction (H), and extends from the one side to the another side in the axial direction (X) while facing the lateral direction (H),
the fourth inverter-side terminal piece (42) is aligned with the first inverter-side terminal piece (12), the second inverter-side terminal piece (22), and the third inverter-side terminal piece (32) in the axial direction (X), and is bent from one end portion (43a) in the axial direction (X) of the fourth connection piece (43) to the one side in the lateral direction (H) in a manner to face the up-down direction, and
the fourth motor-side terminal piece (41) is bent from another end portion (43b) in the axial direction (X) of the fourth connection piece (43) to another side in the up-down direction in a manner to face the axial direction (X).

4. The electric drive unit (1) according to claim 1 further comprising:
a plate-shaped third bus bar (30) that connects a third motor terminal (53c) of the motor (50) and a third inverter terminal (66c) of the inverter (60), wherein
the third bus bar (30) includes:
a third motor-side terminal piece (31) that is connected to the third motor terminal (53c);
a third inverter-side terminal piece (32) that is connected to the third inverter terminal (66c); and
a third connection piece (33) that connects the third motor-side terminal piece (31) and the third inverter-side terminal piece (32),
the third connection piece (33) is arranged side by side between the first connection piece (13) and the second connection piece (23) in the lateral direction (H), and extends from the one side to the another side in the axial direction (X) while facing the up-down direction,
the third inverter-side terminal piece (32)is aligned with the first inverter-side terminal piece (12) and the second inverter-side terminal piece (22) in the axial direction (X), extends from one end portion (33a)in the axial direction (X) of the third connection piece (33) to another side in the up-down direction, and is then bent to the another side in the lateral direction (H) in a manner to face the up-down direction, and
the third motor-side terminal piece (31) is bent from another end portion (33b) in the axial direction (X) of the third connection piece (33) to one side in the up-down direction in a manner to face the axial direction (X).

5. The electric drive unit (1) according to claim 4 further comprising:
a plate-shaped fourth bus bar (40) that connects a fourth motor terminal (53d) of the motor (50) and a fourth inverter terminal (66d) of the inverter (60), wherein
the fourth bus bar (40) includes:
a fourth motor-side terminal piece (41) that is connected to the fourth motor terminal (53d);
a fourth inverter-side terminal (42) piece that is connected to the fourth inverter terminal (66d); and
a fourth connection piece (43) that connects the fourth motor-side terminal piece (41) and the fourth inverter-side terminal piece (42),
the fourth connection piece (43) is arranged side by side between the first connection piece (13) and the second connection piece (23) in the lateral direction (H), is aligned with the third connection piece (33) in the up-down direction on the another side in the up-down direction of the third connection piece (33), and extends from the one side to the another side in the axial direction (X) while facing the up-down direction,
the fourth inverter-side terminal piece (42) is aligned with the first inverter-side terminal piece (12), the second inverter-side terminal piece (22), and the third inverter-side terminal piece (32) in the axial direction (X), and is continuous with one end portion (43a) in the axial direction (X) of the fourth connection piece (43) in a manner to face the up-down direction, and
the fourth motor-side terminal piece (41) is bent from another end portion (43b)in the axial direction (X) of the fourth connection piece (43) to the another side in the up-down direction in a manner to face the axial direction (X).

6. The electric drive unit (1) according to claim 3 or 5, wherein the first inverter-side terminal piece (12), the second inverter-side terminal piece (22), the third inverter-side terminal piece (32), and the fourth inverter-side terminal piece (42) are located at the same position in the up-down direction.

7. The electric drive unit (1) according to any of claims 2 to 5, wherein the first motor-side terminal piece (11), the second motor-side terminal piece (21), and the third motor-side terminal piece (31) are located at the same position in the axial direction (X).

8. The electric drive unit (1) according to claim 7, wherein the fourth motor-side terminal piece (41) is arranged to be shifted in the axial direction (X) with respect to the first motor-side terminal piece (11), the second motor-side terminal piece (21), and the third motor-side terminal piece(31).

9. The electric drive unit (1) according to any one of claims 2 to 5, wherein the first motor terminal (53a) and the first inverter terminal (66a) correspond to a U-phase, the second motor terminal (53b) and the second inverter terminal (66b) correspond to a V-phase, and the third motor terminal (53c) and the third inverter terminal (66c) correspond to a W-phase.

10. The electric drive unit (1) according to claim 3 or 5, wherein the fourth motor terminal (53d) and the fourth inverter terminal (66d) correspond to a neutral point.

11. The electric drive unit (1) according to any one of claims 1 to 5, further comprising a terminal block (70) made of resin that holds the bus bars (10, 20, 30, 40) and insulates the bus bars (10, 20, 30, 40) from each other.

12. The electric drive unit (1) according to claim 11, wherein the terminal block (70) is formed by injection molding.

13. The electric drive unit (1) according to any of claims 11 or 12, wherein the inverter (60) includes a case (63) in which an accommodation hole (63a) is formed, and the terminal block (70) is inserted in the accommodation hole (63a).

14. A vehicle comprising the electric drive unit (1) according to any one of claims 1 to 13.
